# EUROPÄISCHE PATENTSCHRIFT

(11) **EP 1 409 864 B1**
(45) Veröffentlichungstag und Bekanntmachung des Hinweises auf die Patenterteilung: **01.12.2004**
(21) Anmeldenummer: 02760088.1
(22) Anmeldetag: 09.07.2002
(51) Int. Cl.: F02D 41/02, F02D 37/02, F02D 41/14

(54) **VERFAHREN UND VORRICHTUNG ZUR STEUERUNG EINER ANTRIEBSEINHEIT**
METHOD AND DEVICE FOR CONTROLLING A DRIVE UNIT
PROCEDE ET DISPOSITIF POUR COMMANDER UNE UNITE D'ENTRAINEMENT

(30) Priorität: 13.07.2001 DE 10133405
(43) Veröffentlichungstag der Anmeldung: 21.04.2004
(73) Patentinhaber: ROBERT BOSCH GMBH, 70442 Stuttgart (DE)
(72) Erfinder: HESS, Werner, 70499 Stuttgart (DE); PANTRING, Juergen, 71701 Schwieberdingen (DE); HARTMANN, Dirk, 70469 Stuttgart (DE)
(86) Internationale Anmeldenummer: PCT/DE2002/002505
(87) Internationale Veröffentlichungsnummer: WO 2003/006807

(56) Entgegenhaltungen:
- DE-A- 2 849 554
- DE-A- 4 239 711
- GB-A- 2 041 577
- US-A- 5 477 827

## Beschreibung

### Stand der Technik

Die Erfindung betrifft ein Verfahren und eine Vorrichtung zur Steuerung einer Antriebseinheit.

Aus der deutschen Patentanmeldung DE-A 100 48 015 ist eine Vorgehensweise zur Steuerung einer Antriebseinheit bekannt, bei welcher Vorgabengrößen, vorzugsweise Sollmomentenwerte für die Antriebseinheit, aus verschiedenen Quellen zu einem resultierenden Sollmoment koordiniert werden. In Abhängigkeit eines aus diesen verschiedenen Sollgrößen resultierender Sollgröße wird die Antriebseinheit gesteuert. Diese bekannte Koordination ist dezentral, d.h. die Koordination findet in mehreren, unabhängigen Stufen statt, wobei die Resultierende der ersten Stufe Eingangsgröße der zweiten Stufe ist, etc.. In der gezeigten Ausführung werden Sollgrößen, die unabhängig von der Art der Antriebseinheit sind, in einer ersten Koordinationsstufe, Sollgrößen, die antriebseinheitsspezifisch sind, in einer zweiten Koordinationsstufe koordiniert, wobei die Resultierende der ersten Stufe Eingangsgröße der zweiten Stufe ist.

Dabei werden diverse physikalische Größen innerhalb eines Kraftfahrzeugs, wie beispielsweise der Fahrerwunsch, eine Drehzahlbegrenzung, eine Geschwindigkeitsbegrenzung, eine Fahrgeschwindigkeitsregelung, ein Getriebeund/oder Bauteileschutz, der Eingriff eines Stabilitätsprogramms, einer Antriebsschlupfregelung und/oder einer Motorschleppmomentenregelung, etc. als Anforderung, insbesondere Momentenanforderung an die Antriebseinheit formuliert. Daher kann die Antriebseinheit als Komponente des Fahrzeugs als intelligentes Stellglied zur Umsetzung von solchen Anforderungen betrachtet werden. Die Anforderungen selbst können dabei verschiedenen funktionalen Einheiten innerhalb des Fahrzeugs zugeordnet werden. Oft sind diese funktionalen Einheiten durch eigene Steuergeräte gekennzeichnet, wie beispielsweise ein Stabilitätsprogramm oder eine Getriebesteuerung, wobei diese Hardware-Partitionierung in der Regel historisch gewachsen ist, also nicht zwingend ist.

In heutigen Motorsteuerungen werden diese Anforderungen (Momentenanforderungen), erhöhende sowie reduzierende, in einem zentralen Funktionsmodul koordiniert. Ein Beispiel hierfür zeigt die DE-A 197 39 567. Dort sind neben den Momentenanforderungen auch sämtliche Momentenbegrenzungen bekannt, so dass sichergestellt ist, dass für Motor- und Gesamtfahrzeug zulässige Betriebsgrenzen nicht überschritten werden. So wird durch gezielte Abfolge von Minimal- und Maximalauswahlfunktionsblöcken ein Motorsollmoment gebildet, welches die zulässigen Betriebsgrenzen nicht überschreitet. In einem Minimalauswahlblock findet dabei eine Minimalauswahl der Eingangsgrößen und somit eine Begrenzung der momentenreduzierenden Eingriffe statt, während in einem Maximalwertauswahlblock eine Maximalmauswahl der Eingangsgrößen stattfindet und somit erhöhende Eingriffe begrenzt werden.

Bei dem oben genannten Ansatz einer Auftrennung werden durch die funktionale Strukturierung im Fahrzeugverbund Momentenanforderungen auch dezentral ausgewertet und koordiniert. Das Ergebnis dieser dezentralen Koordination ist dann eine Momentenanforderung an die Antriebseinheit. Nachgeordnete Momentenkoordinationen erhalten dabei keine Information über die Quelle der Momentenanforderung. Werden jedoch lediglich koordinierte Sollmomenten ohne Zusatzinformation an nachfolgende Koordinationstufen übertragen, so entsteht das Problem, dass in der nachfolgenden Koordination ein Sollmoment vorgegeben wird, welches die Momentengrenze einer vorherigen Koordination verletzt.

Es ist somit wünschenswert, dass bei einer dezentralen Momentenkoordination sichergestellt ist, dass keine Betriebsgrenze eines Teilsystems und keine Betriebsgrenze des Gesamtsystems verletzt wird.

### Vorteile der Erfindung

Dadurch, dass bei einer dezentralen Momentenkoordination neben den resultierenden Sollmoment auch die zu beachtenden Momentengrenzen übertragen und in nachfolgenden Koordinationsstufen berücksichtigt werden, wird wirksam vermieden, dass Betriebsgrenzen von Teilsystemen und Betriebsgrenzen des Gesamtsystems verletzt werden.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.
Figur 1 zeigt ein Übersichtsschaltbild einer Steuereinrichtung zur Steuerung einer Antriebseinheit.
Figur 2 zeigt ein Ablaufdiagramm einer dezentralen Koordination von Anforderungen an eine Antriebseinheit, an deren Beispiel die obengenannte Problematik dargestellt ist.
In Figur 3 ist ein Ablaufdiagramm skizziert, welches eine dezentrale Koordination von Vorgabegrößen, insbesondere von Sollmomentenwerten darstellt, bei welchem neben resultierenden Vorgabegrößen jeder Koordinationsstufe auch Grenzwerte übertragen werden.

### Beschreibung von Ausführungsbeispielen

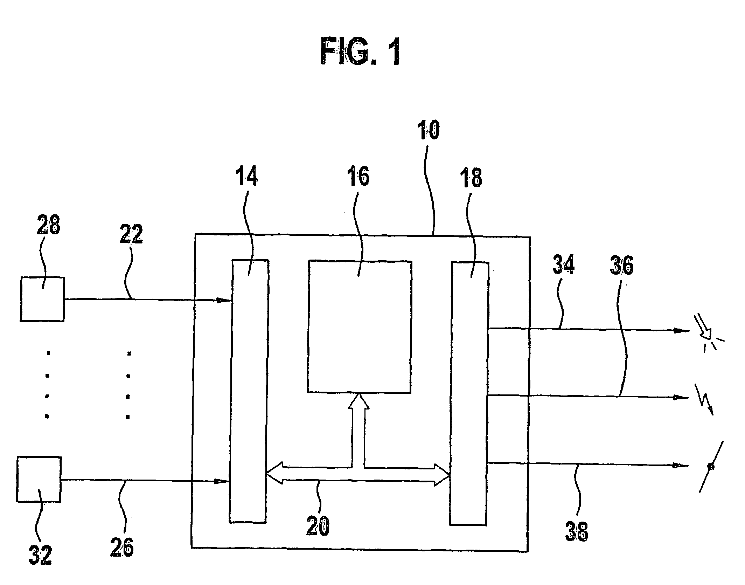

Figur 1 zeigt ein Blockschaltbild einer Steuereinrichtung zur Steuerung einer Antriebseinheit, insbesondere einer Brennkraftmaschine. Es ist eine Steuereinheit 10 vorgesehen, welche als Komponenten eine Eingangsschaltung 14, wenigstens eine Rechnereinheit 16 und eine Ausgangsschaltung 18 aufweist. Ein Kommunikationssystem 20 verbindet diese Komponenten zum gegenseitigen Datenaustausch. Der Eingangsschaltung 14 der Steuereinheit 10 werden Eingangsleitungen 22 bis 26 zugeführt, welche in einem bevorzugten Ausführungsbeispiel als Bussystem ausgeführt sind und über die der Steuereinheit 10 Signale zugeführt werden, welche zur Steuerung der Antriebseinheit auszuwertende Betriebsgrößen repräsentieren. Diese Signale werden von Meßeinrichtungen 28 bis 32 erfaßt. Derartige Betriebsgrößen sind Fahrpedalstellung, Motordrehzahl, Motorlast, Abgaszusammensetzung, Motortemperatur, etc. Über die Ausgangsschaltung 18 steuert die Steuereinheit 10 die Leistung der Antriebseinheit. Dies ist in Figur 1 anhand der Ausgangsleitungen 34, 36 und 38 symbolisiert, über welche die einzuspritzende Kraftstoffmasse, den Zündwinkel der Brennkraftmaschine sowie wenigstens eine elektrisch betätigbare Drosselklappe zur Einstellung der Luftzufuhr zur Brennkraftmaschine betätigt werden. Neben den geschilderten Eingangsgrößen sind weitere Steuersysteme des Fahrzeugs vorgesehen, die der Eingangsschaltung 14 Vorgabegrößen, beispielsweise Drehmomentensollwerte, übermitteln. Derartige Steuersysteme sind beispielsweise Antriebsschlupfregelungen, Fahrdynamikregelungen, Getriebesteuerungen, Motorschleppmomentenregelungen, Geschwindigkeitsregler, Geschwindigkeitsbegrenzer, etc. Über die dargestellten Stellpfade werden die Luftzufuhr zur Brennkraftmaschine, der Zündwinkel der einzelnen Zylinder, die einzuspritzende Kraftstoffmasse, der Einspritzzeitpunkt und/oder das Luft-/Kraftstoffverhältnis, etc. eingestellt. Neben den dargestellten Sollwertvorgaben, den externen Sollwertvorgaben, zu denen auch eine Sollwertvorgabe durch den Fahrer in Form eines Fahrwunsches und einer Maximalgeschwindigkeitsbegrenzung gehören, sind interne Vorgabengrößen zur Steuerung der Antriebseinheit vorhanden, beispielsweise eine Drehmomentenänderung einer Leerlaufregelung, eine Drehzahlbegrenzung, die eine entsprechende Sollvorgabengröße ausgibt, eine Drehmomentenbegrenzung, eine Funktion zum Bauteileschutz, ein Abwürgeschutz, etc..

Die beschriebene Vorgehensweise ist nicht nur in Verbindung mit Brennkraftmaschinen anwendbar, sondern auch bei anderen Antriebskonzepten, z.B. Elektromotoren. In diesem Fall sind die Stellgrößen entsprechend anzupassen.

Als Sollwertvorgabegröße werden im bevorzugten Ausführungsbeispiel Drehmomentengrößen verwendet. In anderen Ausführungen werden unter entsprechender Anpassung andere, sich auf Ausgangsgrößen der Antriebseinheit beziehende Größen wie Leistung, Drehzahl, etc., als Sollwerte vorgegeben.

Die Koordination dieser unterschiedlichen Anforderungen ist dabei dezentral. In einer Ausführung werden erste Sollgrößen in einer ersten Koordinationsstufe z.B. im Rahmen von Minimal- und Maximalwertauswahlschritten miteinander verglichen. Als Ergebnis wird ein resultierende Sollgröße weitergegeben. In der eingangsgenannten bekannten Ausführung stellen diese Sollgrößen motorunabhängige Eingriffsgrößen dar, wie Fahrerwunschmoment, das Sollmoment eines Fahrgeschwindigkeitsreglers oder eines adaptiven Fahrgeschwindigkeitsreglers (ACC), einer Geschwindigkeitsbegrenzung, einer Fahrstabilitätsregelung, einer Motorschleppmomentenregelung und/oder einer Antriebsschlupfregelung. Diese motorunabhängigen Vorgabegrößen, die dem Abtrieb zuzurechnen sind, stellen Abtriebsmomente bzw. Getriebeausgangsmomente dar und werden auf dieser Ebene koordiniert.

Die resultierende Sollgröße der ersten Koordinationsstufe wird zusammen mit zweiten Sollgrößen einer zweiten Koordinationsstufe zugeführt. Im bekannten Ausführungsbeispiel sind diese zweiten Sollgrößen motorabhängige Größen, insbesondere Sollwerte interner Momentenbegrenzungen, beispielsweise aus Bauteileschutzgründen, aus Ausmagerschutzgründen bei Vollast, ein Sollwert für eine Maximaldrehzahlbegrenzung, etc. Die Resultierende der zweiten Koordinationsstufe ist ein Sollwert für die Einstellung der Antriebseinheit, der im Falle einer Brennkraftmaschine in Sollwerte für die motorspezifischen Stellpfade umgesetzt wird.

Die beschriebene Aufteilung ist ein bevorzugtes Beispiel. In anderen Ausführungen werden andere dezentrale Aufteilungen vorgenommen.

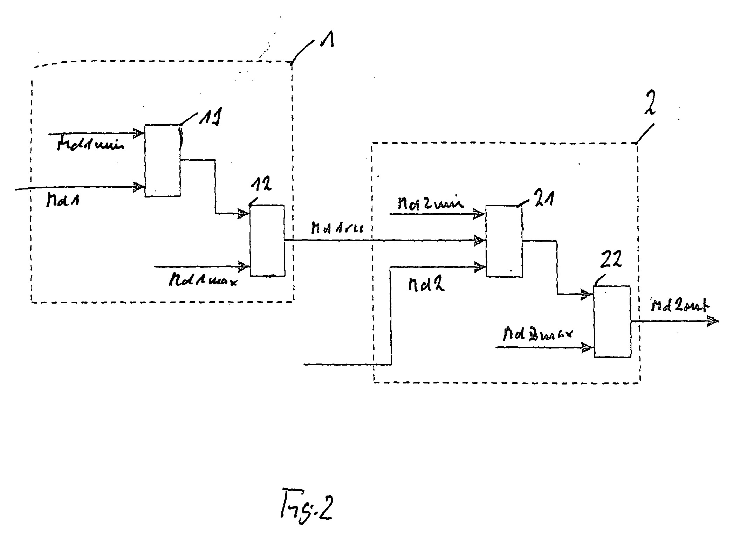

Figur 2 zeigt an einem Beispiel eine solche dezentrale Momentenkoordination. Figur 2 stellt dabei ein Ablaufdiagramm dar, wobei die einzelnen Blöcke Programme oder Programmteile beschreiben, die Verbindungspfeile den Informationsfluss darstellen. Die dezentrale Momentenkoordination besteht aus einem ersten Koordinator 1 (erste Koordinationsstufe) und einem nachfolgenden zweiten Koordinator 2 (zweite Koordinationsstufe). Dabei wird dem Koordinator 1 eine Vorgabegröße MD1, beispielsweise ein Fahrerwunschsollmoment, zugeführt. Dieses wird in einer Maximalwertauswahlstufe 11 mit einem vorgegebenen, ggf. gespeicherten Minimalwert MD1MIN, beispielsweise einem Minimalmoment vorgegeben von einem elektronischen Stabilitätsprogramm, verknüpft. Der größere der beiden Werte wird dann einer Minimalauswahlstufe 12 zugeführt, in der der resultierende Wert der Stufe 11 mit einem Maximalwert MD1MAX, beispielsweise einem Maximalwert, der aus einer Geschwindigkeitsbegrenzung vorgegeben wird, verknüpft. Dann wird der kleinere der beiden Werte als resultierender Wert MD1RES an den zweiten Koordinator 2 übertragen. Dort wird der resultierende Wert des Koordinators 1 einer Maximalwertauswahlstufe 21 zugeführt. Dieser wird ferner eine weitere Vorgabegröße MD2, beispielsweise dem Sollmoment eines Motorschleppmomentenreglers zugeführt. Ferner wird der Maximalwertauswahlstufe 21 ein Minimalwert MD2MIN, beispielsweise ein von einem Leerlaufregler abgeleiteter Minimalwert, zugeführt. Der größte dieser Werte wird als Resultierende einer Minimalwertauswahlstufe 22 zugeführt, der ferner ein Maximalwert MD2MAX zugeführt wird, der beispielsweise aus einer Maximaldrehzahlbegrenzung abgeleitet ist. Die Ausgangsgröße MD2OUT wird als kleinerer der beiden Werte der Minimalwertauswahlstufe 22 gebildet und ausgegeben. In Abhängigkeit des Ausgangswertes wird die Antriebseinheit eingestellt, bzw. der Ausgangswert wird einer weiteren Koordinationstufe als Eingangsgröße zugeführt.

Bei einer wie oben dargestellten dezentralen Momentenkoordination kann die folgende unbefriedigende Situation auftreten. Folgendes Zahlenbeispiel macht die Problematik deutlich. Ist beispielsweise MD1MIN 100 Nm, MD1MAX 200 Nm und MD1 250 Nm, so ist die Ausgangsgröße des Koordinators 1 200 Nm, nämlich der größere der Werte aus MD1 und MD1MIN und der kleinere aus Resulterienden (MD1, MD1MIN) und MD1MAX. Im Koordinator 2 werden dann die 200 Nm (Resultierende der ersten Koordination) mit MD2MIN, im Beispiel 100 Nm und der Eingangsgröße MD2 (250 Nm) in der Maximalwertauswahlstufe 21 verknüpft. Ausgangsgröße ist 250 Nm, die mit dem Maximalwert MD2MAX, der als 300 Nm angenommen ist, in der Minimalwertauswahlstufe 22 bewertet wird. Der kleinere Wert, nämlich 250 Nm wird ausgegeben. Man sieht deutlich, dass der Ausgabewert der zweiten Koordination den Maximalwert der ersten Koordination verletzt. War dieser beispielsweise für einen Bauteileschutz verantwortlich, so ist dieser Bauteileschutz nicht mehr gewährleistet.

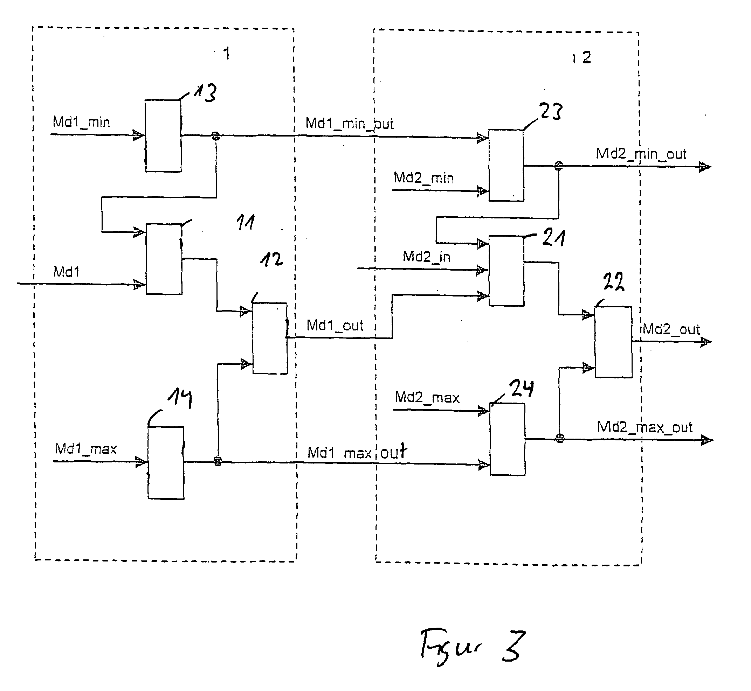

Aus diesen Gründen ist wie nachstehend anhand des Ablaufdiagramms der Figur 3 skizziert bei einer dezentralen Momentenkoordination vorgesehen, neben dem Sollgrößen (Wunschmomenten) als Ergebnis einer Koordinationsstufe auch die Momentengrenzen zu übertragen und in nachfolgenden Koordinatoren zu berücksichtigen. Ein Funktionsblock für eine Koordination (Koordinator, Koordinationsstufe) besteht demnach aus den folgenden Einzelteilen: Koordination der Vorgabegrößen (Momentenanforderungen, Sollmomentenwerte), Koordination der unteren Begrenzungen (Momentenbegrenzungen, Begrenzungsmomentenwerte) und Koordination der oberen Begrenzungen (Momentenbegrenzungen, Begrenzungsmomtenwerte).

In Figur 3 ist ein Ablaufdiagramm dargestellt, bei welchem diese Forderungen umgesetzt sind. Auch hier sind wieder Koordinatoren 1 und 2 vorgesehen, wobei die einzelnen Blöcke Programme oder Programmteile beschreiben, die Verbindungspfeile den Informationsfluss darstellen. Dem Koordinator 1 wird wie anhand des Beispiels in Figur 2 dargestellt eine Vorgabegröße (Sollmomentenwert) MD1 zugeführt. Ferner liegen intern Minimal- und Maximalwerte MD1MIN und MD1MAX vor. Neben der bereits in Figur 2 beschriebenen Vorgehensweise der Maximalwertauswahl zwischen Eingangsgröße MD1 und Minimalgröße MD1MIN in der Maximalwertauswahlstufe 11 sowie der Minimalwertauswahl zwischen der Resultierenden der Maximalwertauswahl 11 und dem Maximalwertmoment MD1MAX in der Minimalwertauswahlstufe 12 sind folgende Besonderheiten vorgesehen. Das Ergebnis der Minimalwertauswahl in 12 wird als MD1OUT an den zweiten Koordinator abgegebenen. Neben diesem resultierenden Sollmoment MD1OUT wird an den Koordinator 2 ferner ein Minimalwert MD1MINOUT und ein Maximalwert MD1MAXOUT übergeben. Diese Ausgangsgrößen entsprechen bei nur jeweils einer Begrenzungsgröße der vorliegenden Größe. In einem Ausführungsbeispiel liegen in einem Koordinator mehrere Minimal- und/oder Maximalwerte vor. In diesem Fall ist der übertragene Minimal- und/oder Maximalwert sowie die den Auswahlen 11 und 12 zugrundeliegenden Werte im Falle von Minimalwerten das Ergebnis einer Maximalwertauswahl 13 aus mehreren Minimalwerten, im Falle von Maximalwerten das Ergebnis einer Minimalwertauswahl 14 aus mehreren Maximalwerten.

Liegt nur ein oder mehrere Maximalwerte vor oder nur ein oder mehrere Minimalwerte, wird in dieser Ausführung auch nur ein Begrenzungswert übertragen.

Im Koordinator 2 wird der übertragene Minimalwert MD1MINOUT in einer Maximalwertauswahlstufe 23 mit dem im Koordinator vorliegenden Minimalwert MD2MIN (ggf. auch mit mehreren) verknüpft. Der größte der Werte wird der Maximalwertauswahlstufe 21 zugeführt und gegebenenfalls als Ausgabegröße MD2MINOUT an den nächsten Koordinator übergeben. In der Maximalwertauswahlstufe 21 wird der größte der zugeführten Werte als resultierender Momentensollwert weitergegeben. Die zugeführten Größen sind neben dem ermittelten Minimalwert MD2MINOUT die Eingangsgröße MD2IN des zweiten Koordinators und die übertragene resultierende Größe MD1OUT des ersten Koordinators. Ferner ist eine Minimalwertauswahlstufe 24 vorgesehen, in welchem die Maximalwerte koordiniert werden. Zum einen wird dieser Stufe 24 der übertragene resultierende Maximalwert MD1MAXOUT des ersten Koordinators sowie ein oder mehrere vorliegende Maximalgrößen im zweiten Koordinator MD2MAX zugeführt. Der resultierende Maximalwert MD2MAXOUT wird an die Minimalwertauswahlstufe 22 geführt und gegebenenfalls an einen nachfolgenden Koordinator ausgegeben. Der Minimalwertauswahlstufe 22 wird ferner auch die resultierende Größe der Maximalwertauswahlstufe 21 zugeführt. Der kleinste der beiden zugeführte Werte wird als Ausgabegröße MD2OUT an einen weiteren Koordinator und/oder zur Einstellung der Antriebseinheit und/oder zur weiteren Verarbeitung ausgegeben.

Ein Zahlenbeispiel zeigt, dass durch diese Vorgehensweise die Ausgabegröße MD2OUT die Grenzwerte auch der ersten Koordinationsstufe nicht verletzt. Ist MD1MIN 100 Nm, MD1MAX 200 Nm und MD1 250 Nm, so werden an den zweiten Koordinator MD1OUT 200 Nm, MD1MAXOUT 200 Nm und MD1MINOUT 100 Nm übergeben. Ist dann MD2MIN 100Nm, MD2MAX 300 Nm und MD2 250 Nm, so ergeben sich als Ausgangsgrößen MD2OUT 200 Nm, MD2MAXOUT 200 Nm und MD2MINOUT 100 Nm. Man sieht hier, das MD2OUT mit 200 Nm weder den Minimalwert MD1MIN noch den Maximalwert MD1MAX übersteigt.

Das dargestellt Ausführungsbeispiel zeigt lediglich eine mögliche Realisierung. In anderen Ausführungsbeispielen kann beispielsweise im Koordinator 1 auf eine Minimalwertkoordination verzichtet sein oder in den Auswahlstufen mehrere Größen verknüpft werden, insbesondere mehrere Eingangsgrößen, oder zwischen den Koordinatoren findet entsprechend dem eingangsgenannten Stand der Technik eine Transformation der übertragenen Werte auf eine andere Momentenebene, beispielsweise von einem Getriebeausgangsmoment in ein Motorausgangsmoment oder von einem Motorausgangsmoment in ein indiziertes Moment, statt.

## Patentansprüche

1. Verfahren zur Steuerung einer Antriebseinheit, wobei Vorgabegrößen und Maximalund/oder Minimalgrößen für diese Vorgabegrößen vorgegebenen werden, wobei zur Bildung eines resultierenden Vorgabewertes Vorgabegrößen und Maximal- bzw. Minimalgrößen miteinander im Rahmen einer Koordination verknüpft werden, **dadurch gekennzeichnet, dass** im Rahmen einer ersten Koordination wenigstens eine erste Vorgabegröße mit wenigstens einer ersten Minimal- und/oder Maximalgröße koordiniert wird, die resultierende Vorgabegröße sowie die Minimal- und/oder Maximalgröße an eine zweite Koordination übergeben werden, in der wenigstens eine weitere Vorgabegröße mit der resultierenden Vorgabegröße unter Berücksichtigung von wenigstens einer Minimal- und/oder Maximalgröße zu einer resultierenden Größen miteinander verknüpft werden.

2. Verfahren nach Anspruch 1, **dadurch gekennzeichnet, dass** die Vorgabegrößen und die Minimal- bzw. Maximalgrößen Momente einer Antriebseinheit sind.

3. Verfahren nach einem der vorhergehenden Ansprüche, **dadurch gekennzeichnet, dass** die übertragene Minimalgröße bzw. die übertragene Maximalgröße in der zweiten Koordination mit weiteren Minimalgrößen bzw. Maximalgrößen verknüpft zur Bildung einer resultierenden Minimal- bzw. Maximalgröße verknüpft werden.

4. Verfahren nach einem der vorhergehenden Ansprüche, **dadurch gekennzeichnet, dass** in der zweiten Koordination die weitere Vorgabegröße, die resultierende Vorgabegröße sowie die übertragene Minimal- bzw. Maximalgröße bzw. daraus abgeleitete Minimal- bzw. Maximalgrößen verknüpft werden.

5. Verfahren nach einem der vorhergehenden Ansprüche, **dadurch gekennzeichnet, dass** die übertragenen Größen transformiert werden.

6. Vorrichtung zur Steuerung einer Antriebseinheit, mit wenigstens zwei Koordinatoren, denen wenigstens eine Vorgabegröße zugeführt wird und in denen diese wenigstens eine Vorgabegröße mit wenigstens einer Maximal- und/oder Minimalgröße zur Bildung einer resultierenden Vorgabegröße verknüpft werden, **dadurch gekennzeichnet, dass** jeder der Koordinatoren aus einem Element zur Koordination von Vorgabegrößen, aus einer Koordination von Minimalbegrenzungswerten und/oder aus einer Koordination von Maximalbegrenzungswerten besteht, wobei ein nachgeschalteter Koordinator wenigstens eine resultierende Vorgabegröße, Maximalgröße und/oder Minimalgröße von einem voranstehenden Koordinator empfängt.

## Claims

1. Method for controlling a drive unit, predefined variables and maximum and/or minimum variables for these predefined variables being predefined, predefined variables and maximum and minimum variables being logically linked to one another within the scope of a co-ordination operation in order to form a resulting predefined value, **characterized in that**, within the scope of a first co-ordination operation, at least one first predefined variable is co-ordinated with at least one first minimum and/or maximum variable and the resulting predefined variable and the minimum and/or maximum variable are transmitted to a second co-ordination operation in which at least one further predefined variable is logically linked to the resulting predefined variable taking into account at least one minimum and/or maximum variable to form a resulting variable.

2. Method according to Claim 1, **characterized in that** the predefined variables and the minimum and maximum variables are torques of a drive unit.

3. Method according to one of the preceding claims, **characterized in that**, in the second co-ordination operation, the transmitted minimum variable or the transmitted maximum variable is logically linked to further minimum variables or maximum variables in order to form a resulting minimum or maximum variable.

4. Method according to one of the preceding claims, **characterized in that**, in the second co-ordination operation, the further predefined variable, the resulting predefined variable and the transmitted minimum or maximum variable, or minimum or maximum variables derived therefrom, are logically linked.

5. Method according to one of the preceding claims, **characterized in that** the transmitted variables are transformed.

6. Device for controlling a drive unit, having at least two co-ordinators to which at least one predefined variable is fed and in which this at least one predefined variable is logically linked to at least one maximum and/or minimum variable to form a resulting predefined variable, **characterized in that** each of the co-ordinators is composed of an element for co-ordinating predefined variables, of a co-ordination operation of minimum limiting values and/or of a co-ordination operation of maximum limiting values, a co-ordinator which is connected downstream receiving at least one resulting predefined variable, maximum variable and/or minimum variable from a co-ordinator located upstream.

## Revendications

1. Procédé de commande d'une unité d'entraînement, selon lequel on prédéfinit des grandeurs prédéterminées et des grandeurs maximales et/ou minimales pour les grandeurs prédéterminées, les grandeurs prédéterminées et des grandeurs maximales ou minimales, étant combinées entre elles dans le cadre d'une coordination pour former une valeur prédéterminée résultante,
**caractérisé en ce que**
dans le cadre d'une première coordination, au moins une première grandeur prédéterminée est combinée à au moins une première grandeur minimum et/ou maximum, les grandeurs prédéterminées résultantes ainsi que les grandeurs minimales et/ou maximales étant distribuées dans une deuxième coordination, dans laquelle au moins une autre grandeur prédéterminée est combinée avec la grandeur prédéterminée résultante en tenant compte d'au moins une grandeur minimum et/ou maximum par rapport à une grandeur résultante.

2. Procédé selon la revendication 1,
**caractérisé en ce que**
les grandeurs prédéterminées et les grandeurs minimales, ou maximales sont des couples d'une unité d'entraînement.

3. Procédé selon l'une des revendications précédentes,
**caractérisé en ce que**
les grandeurs minimales transmises ou les grandeurs maximales transmises, sont reliées dans la deuxième coordination à d'autres grandeurs minimales ou grandeurs maximales, pour former une grandeur résultante minimale ou maximale.

4. Procédé selon l'une des revendications précédentes,
**caractérisé en ce que**
dans la deuxième coordination, on combine l'autre grandeur prédéterminée, la grandeur prédéterminée résultante ainsi que la grandeur transmise, minimale ou maximale, respectivement les grandeurs minimales, ou maximales, qui en sont déduites.

5. Procédé selon l'une quelconque des revendications précédentes,
**caractérisé en ce que**
les grandeurs transmises sont transformées.

6. Dispositif de commande d'une unité d'entraînement, comprenant au moins deux coordinateurs auxquels est amenée au moins une grandeur prédéterminée et dans lesquels cette au moins une grandeur prédéterminée est combinée à au moins une grandeur maximum et/ou minimum pour former une valeur prédéterminée résultante,
**caractérisé en ce que**
chacun des coordinateurs est composé d'un élément de coordination de grandeurs prédéterminées, d'un élément de coordination de valeurs de limitation minimale et/ou d'un élément de coordination de valeurs de limitation maximale, un coordinateur étant raccordé et recevant d'un coordinateur disposé en amont au moins une grandeur prédéterminée, une grandeur maximale et/ou une grandeur minimale.
